(19) Europäisches Patentamt / European Patent Office / Office européen des brevets

(11) **EP 2 051 417 A1**

(12) **EUROPEAN PATENT APPLICATION**
published in accordance with Art. 153(4) EPC

(43) Date of publication:
**22.04.2009 Bulletin 2009/17**

(51) Int Cl.:
***H04B 10/18*** (2006.01)

(21) Application number: **07800806.7**

(22) Date of filing: **28.08.2007**

(86) International application number:
**PCT/CN2007/002587**

(87) International publication number:
**WO 2008/074206 (26.06.2008 Gazette 2008/26)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **21.12.2006 CN 200610167786**

(71) Applicant: **Huawei Technologies Co., Ltd.**
**Shenzhen, Guangdong Province 518129 (CN)**

(72) Inventors:
• **LIU, Yue**
  **Guangdong 518129 (CN)**
• **FU, Wei**
  **Guangdong 518129 (CN)**
• **TAO, Zhihui**
  **Guangdong 518129 (CN)**

(74) Representative: **Thun, Clemens**
**Mitscherlich & Partner**
**Sonnenstrasse 33**
**D-80331 München (DE)**

(54) **A DISPERSION COMPENSATION METHOD AND OPTICAL TRANSMISSION SYSTEM**

(57) A dispersion compensation method and a fiber transmission system are disclosed, pertaining to the field of fiber communications. To overcome the demerit of long-distance dispersion compensation without online DCF and suppress the non-linear effect of dispersion compensation in the prior art, the dispersion compensation method includes: after performing electrical pre-compensation processing on a digital transmit signal, the transmitting end controls the electrical/optical converting module to output a distorted optical signal; after receiving the optical signal, the receiving end performs post-compensation processing after converting the optical signal into an electrical signal, or converts the optical signal into an electrical signal after performing post-compensation processing on the optical signal. The fiber transmission system includes: a pre-compensation signal processing module, an optical source, an electrical/optical converting module, a fiber transmission line, an optical/electrical converting module, and a post-compensation processing module. With the technical solution of the present invention, the non-linear effect may be suppressed, and a flexible dispersion compensation solution may be provided for a dynamically configurable network.

Figure 13

## Description

## Field of the Invention

The present invention relates to fiber communications, and in particular, to a dispersion compensation method and a fiber transmission system.

## Background of the Invention

Dispersion means that the waveform of a transmit signal in a fiber is distorted due to different frequency components or different transmission rates of signal components in different modes. Dispersion generates intersymbol interferences between data pulses in the optical transmission. The impact of dispersion on the system performance cannot be ignored. An optical transmission system with the transmission rate of more than 10 Gbit/s needs a dispersion compensation technology to ensure the system transmission. Currently, dispersion compensation fiber (DCF) is a popular dispersion compensation technology to implement dispersion compensation, the dispersion characteristics of which are opposite to those of the transmission fiber. This dispersion compensation mode is easy to use, but has the following unavoidable weaknesses: large volume, signal delay, need of an amplifier for additional loss compensation, and high cost. This compensation mode cannot provide flexible dispersion compensation. Though the DCF mode has practical utility in a point-to-point optical transmission system, it is difficult to meet application requirements in a complicated network with wavelength add/drop, especially in a flexible network that may be dynamically rebuilt. The reason is that dispersion varies with transmission paths through which the fiber compensation passes. However, as the network traffic continues to converge to dynamic IP traffic, a flexible and dynamic fiber network infrastructure is indispensable. A flexible optical network layer needs flexible network nodes to perform dynamic and simple network rebuilding and respond to any requirements for wavelength grooming and dynamic routing.

In recent years, electrical dispersion compensation has attracted attention from technicians. Electronic dispersion compensation means partially or completely compensating the transmit signal for losses incurred due to dispersion through electrical domain signal processing in a transmitter or receiver of an optical transmission system. The compensation mode in which the signal processing is performed in the transmitter is called pre-processing mode, and the compensation mode in which the signal processing is performed in the receiver is called post-compensation mode. The electrical dispersion compensation mode overcomes all the weaknesses of the preceding DCF compensation mode. Besides the merit of low cost, the electrical domain compensation mode can further provide adaptive dispersion compensation, that is, it can adjust the amount of dispersion compensation. This function serves as the basis for dynamic network configuration.

The electrical domain compensation mode, however, has limitations. In post-compensation mode, the dispersion compensation is limited to the scope of 2,000 ps/nm, that is, the post-compensation mode can only compensate a single-mode fiber within a transmission distance of 200 km only; in pre-compensation mode, the compensation may be provided over a transmission distance of more than 1,000 km, but must be received in a distance near a preset compensation distance. Therefore, it is difficult to apply the two electrical domain compensation modes in building a long-distance transmission network without online dispersion compensation or a network with dynamic configuration.

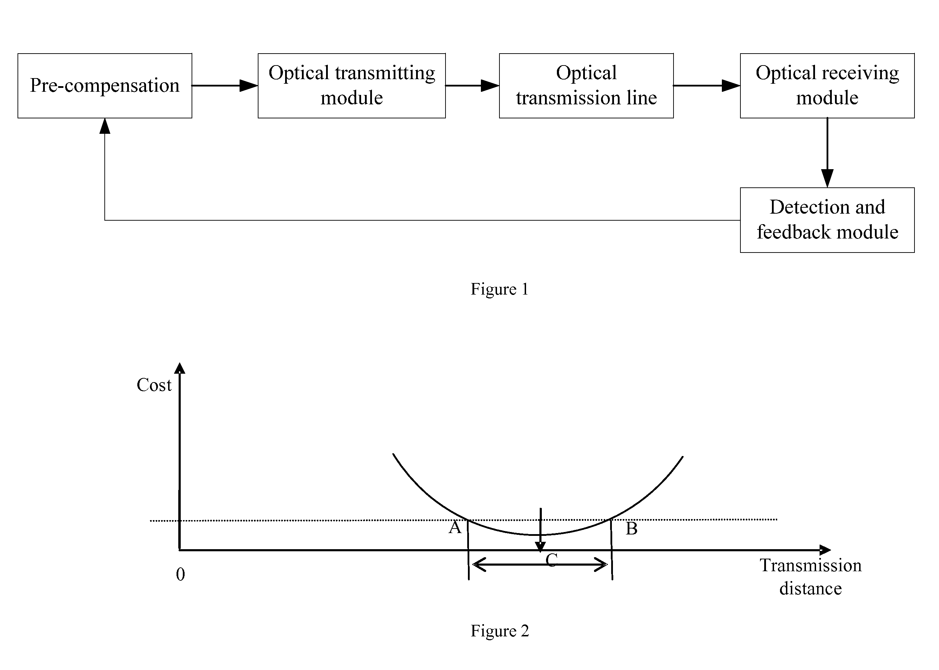

As shown in Figure 1, in pre-compensation mode, the optical transmitter pre-processes a signal to pre-compensate the impact of a transmission line on the signal. That is, on the transmission line, the signal is in the over-compensation state, and the signal is recovered to the original waveform only after the preset compensation distance is traversed (supposing impacts of other factors are ignored).

The signal has a certain tolerance of dispersion (the tolerance depends on the transmission rate. The higher the transmission rate is, the smaller the tolerance will be). A system that adopts the pre-compensation mode has receiving limitations, as shown in Figure 2. The compensation scope is proper and the signal can be received when the transmission distance is between point A and point B; when the transmission distance does not reach point A, the signal is in the over-compensation state; when the transmission distance is beyond point B, the signal is in the under-compensation state; point C is the optimal receiving distance. When the transmission distance turns longer or shorter, the pre-compensating module needs to adjust the compensation amount. The quality of the transmit signal can be tested at the receiving end only. That is, for a transmission system that adopts the pre-compensation solution, to implement adaptive compensation, the feedback control signal must be sent from a receiving node to a sending node. This may be difficult in a complicated network, especially in a mesh network. In addition, the feedback signal may produce a delay.

The prior art provides a tunable dispersion compensation method. This method is based on the combination of optical tunable dispersion compensator and receiving end electrical dispersion compensator (EDC), thus expanding the tunable dispersion compensation scope. The optical tunable dispersion compensator achieves a dispersion compensation scope of less than 3,000 ps/nm, and may support the transmission of a 10 Gbit/s signal on a single-mode fiber for less than 200 km. The EDC based on maximum likelihood sequence estimate (MLSE) may also achieve a compensation scope of less than 3,000 ps/nm. Thus, this compensation solution needs an additional online DCF compensation technology to implement long-distance transmission.

Besides dispersion, a non-linear effect may damage the optical transmission system. Through emulation, it is found that the dispersion compensation at either end of the line cannot well suppress the non-linear effect.

To sum up, the dispersion compensation method in the prior art cannot meet actual requirements with respect to long-distance dispersion compensation without online DCF and non-linear effect suppression.

## Summary of the Embodiments

Embodiments of the present invention provide a dispersion compensation method and a fiber transmission system to overcome the weaknesses of the long-distance dispersion compensation without online DCF and to suppress the non-linear effect of the dispersion compensation in the prior art. Embodiments of the present invention provide the following technical solution:

A dispersion compensation method includes:

by a transmitting end, performing electrical pre-compensation processing on a transmit signal to obtain a distorted electrical signal, and converting an optical carrier signal into a distorted optical signal through modulation according to the distorted electrical signal; and

after recovering the distorted optical signal to a recovered optical signal through a transmission line, sending the signal to a receiving end; upon receipt of the recovered optical signal, by the receiving end, performing post-compensation processing after converting the recovered optical signal into an electrical signal, or performing post-compensation processing before converting the recovered optical signal into an electrical signal.

A fiber transmission system provided in an embodiment of the present invention includes a transmitting end, a fiber transmission line and a receiving end.

The transmitting end includes:

a pre-compensation signal processing module, adapted to perform electrical pre-compensation processing on a transmit signal to obtain a distorted electrical signal; and

an electrical/optical converting module, adapted to convert an optical carrier signal into a distorted optical signal through modulation according to the distorted electrical signal sent from the pre-compensation signal processing module.

The receiving end includes:

an optical/electrical converting module, adapted to convert the received optical signal into an electrical signal, where the optical signal is recovered from the distorted optical signal through the fiber transmission line; and

a post-compensation processing module, adapted to perform dispersion compensation on the optical signal before the optical signal is converted by the optical/electrical converting module, or the electrical signal after the optical signal is converted by the optical/electrical converting module.

The technical solution provided by embodiments of the present invention may bring the following benefits:

1. Allocating the dispersion compensation to both ends of the transmission line may suppress the non-linear effect;

2. Adjusting the amount of dispersion pre-compensation according to the network configuration information may facilitate the back-end feedback of the pre-compensation mode and improve the practicability of this technical solution;

3. With the method that the optimal transmission distance is controlled through pre-compensation and that tunable dispersion compensation is provided through post-compensation, the system does not require an online dispersion compensating module, and a flexible dispersion compensation solution is provided for a dynamically configurable network.

## Brief Description of the Drawings

Figure 1 shows a structure of an optical transmission system that adopts the pre-compensation solution in the prior art;

Figure 2 shows a relationship between the system cost and the transmission distance of an optical transmission system that adopts the pre-compensation solution in the prior art;

Figure 3 shows a structure of a fiber transmission system according to an embodiment of the present invention;

Figure 4 shows a relationship between the system cost and the transmission distance of a dispersion compensation method according to an embodiment of the present invention;

Figure 5 shows a process of implementing a pre-compensation processing module according to an embodiment of the present invention;

Figure 6 shows a process of implementing a digital pre-processing module according to an embodiment of the present invention;

Figure 7 shows a module connection in a first method for post-compensation and feedback control according to an embodiment of the present invention;

Figure 8 shows a module connection in a second method for post-compensation and feedback control according to an embodiment of the present invention;

Figure 9 shows a module connection in a third method for post-compensation and feedback control according to an embodiment of the present invention;

Figure 10 shows a structure of a detection and feedback module according to an embodiment of the present invention;

Figure 11 shows a distribution of electrical signal spectral power detected by the receiving end according to an embodiment of the present invention;

Figure 12 is a chart where the spectral power changes with the amount of dispersion according to an embodiment of the present invention;

Figure 13 is a flowchart of a dispersion compensation method according to an embodiment of the present invention; and

Figure 14 compares the emulation result of the dispersion compensation according to an embodiment of the present invention with the emulation result of the dispersion compensation in the prior art.

**Detailed Description of the Embodiments**

The present invention is hereinafter described in detail with reference to the accompanying drawings and preferred embodiments, and is not limited to these embodiments.

Embodiments of the present invention achieve the objects of suppressing the non-linear effect and improving the system transmission performance through laying out the dispersion distribution on a transmission line reasonably, i.e., through the combination of pre-compensation and post-compensation, and by configuring the dispersion compensation of an optical network dynamically.

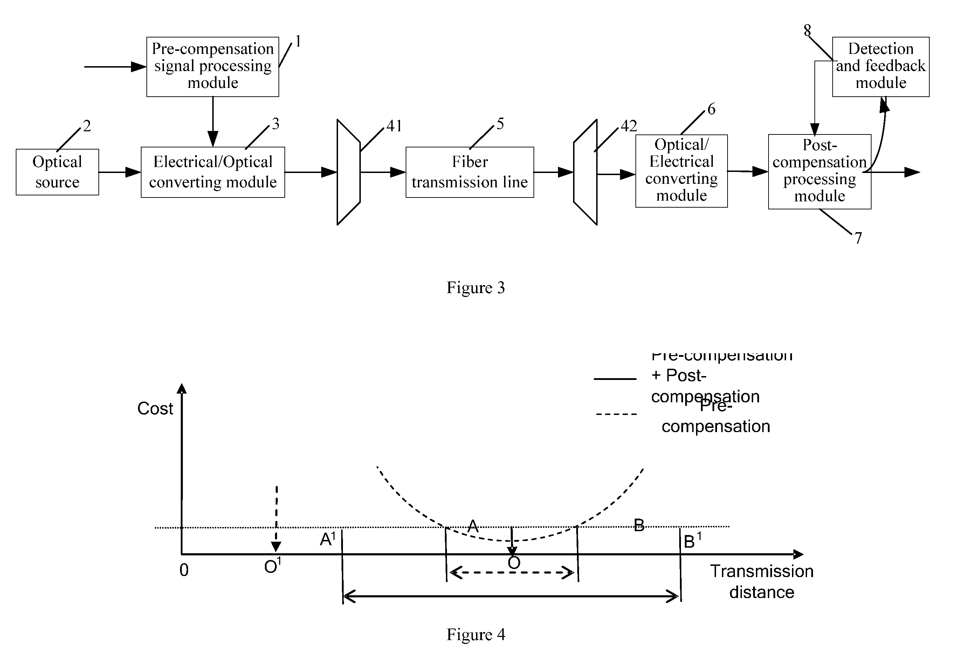

As shown in Figure 3, a fiber transmission system provided in an embodiment of the present invention includes a transmitting end, a fiber transmission line and a receiving end.

The transmitting end includes:

a pre-compensation signal processing module 1, adapted to perform electrical pre-compensation processing on a digital transmit signal to obtain a distorted electrical signal of an electrical/optical converting module 3;

an optical source 2, adapted to provide the electrical/optical converting module 3 with an optical carrier signal;

the electrical/optical converting module 3, adapted to convert the optical carrier signal into a distorted optical signal through modulation according to the distorted electrical signal sent from the pre-compensation signal processing module 1, and transmit the distorted optical signal to a fiber transmission line 5; and

the fiber transmission line 5, adapted to transmit the distorted optical signal sent from the electrical/optical converting module 3, where the distorted optical signal which passes through the fiber transmission line 5 is recovered to a recovered optical signal, and the recovered optical signal is transmitted to an optical/electrical converting module 6 of the receiving end.

The receiving end includes:

the optical/electrical converting module 6, adapted to convert the received recovered optical signal into an electrical signal, and transmit the electrical signal to a post-compensation processing module 7; and the post-compensation processing module 7, adapted to perform dispersion compensation on the received electrical signal.

To adjust the compensation amount dynamically, the system further includes:

a detection and feedback module 8, adapted to detect the quality of the received electrical signal, and feed back the detection result to the post-compensation processing module 7 by the receiving end.

When the system is used for dispersion compensation in a wavelength division multiplexing (WDM) system, an optical multiplexer 41 needs to be set between the electrical/optical converting module 3 and the fiber transmission line 5 and an optical demultiplexer 42 needs to be set between the fiber transmission line 5 and the optical/electrical converting module 6.

The pre-compensation signal processing module 1 may adjust the optimal receiving point of the whole system through configuration. As shown in Figure 4, the pre-compensation signal processing module 1 adjusts the optimal receiving point from point O to point O1 by adjusting the pre-compensation result. This function may adjust the dispersion compensation scope when the network configuration changes. An adjustable specification may be set according to the total dispersion tolerance of the system to reduce the processing complexity. If the total dispersion tolerance of the system is +/-L km, the specification is L km, [L+2L] km, ..., [L+2nL] km.

In the embodiment shown in Figure 4, the pre-compensation signal processing module 1 and the post-compensation processing module 7 may expand the signal receiving scope from segment AB to segment $A_1B_1$ by combining pre-compensation and post-compensation.

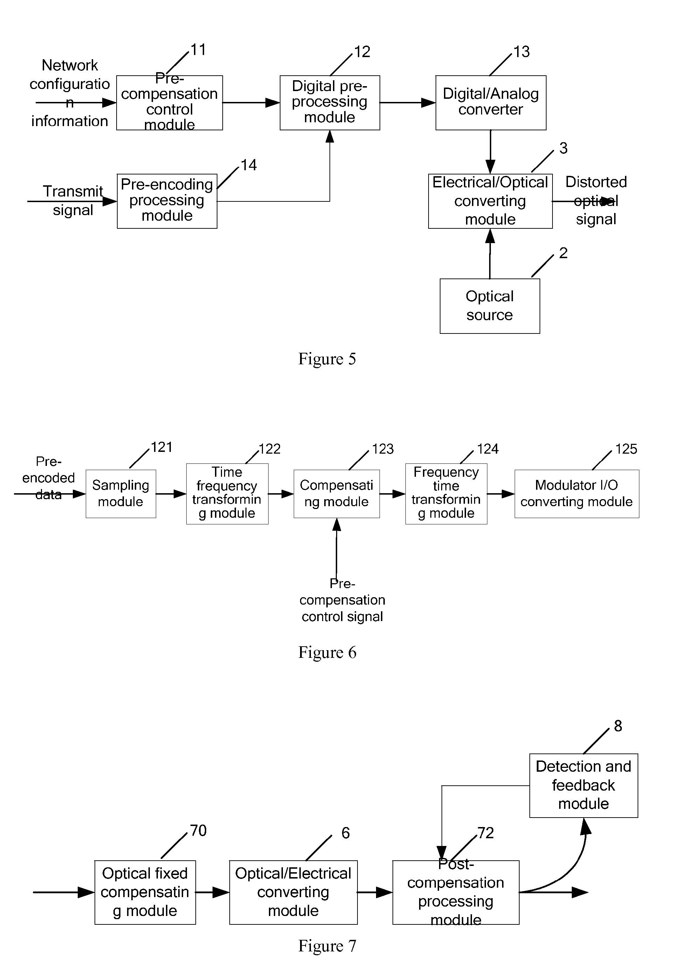

As shown in Figure 5, the pre-compensation signal processing module 1 includes:

a pre-compensation control module 11, adapted to receive the network configuration information, obtain the dispersion amount of the signal passing through the transmission line, obtain a control signal according to the dispersion amount, and send the control signal to a digital pre-processing module 12; the digital pre-processing module 12, adapted to process the received control signal, pre-distort the signal to generate a distorted electrical signal, compensate the dispersion amount, and send the distorted electrical signal to a digital/analog converter 13; and

the digital/analog converter 13, adapted to convert the received digital distorted electrical signal into an analog distorted electrical signal, and send the analog distorted electrical signal to the electrical/optical converting module 3.

The network configuration information changes only when the network is rebuilt.

If the optical signal is modulated in such special modes as optical duobinary (ODB) and differential phase shift keying (DPSK), a pre-encoding processing module 14 needs to be added to the pre-compensation signal processing module 1. The pre-encoding processing module 14 is adapted to pre-encode the transmit signal, and send the pre-encoded transmit signal to the digital pre-processing module 12.

As shown in Figure 6, the digital pre-processing module 12 includes:

a sampling module 121, adapted to receive the pre-encoded transmit signal, and send the pre-encoded transmit signal to a time frequency transforming module 122;

the time frequency transforming module 122, adapted to perform fast Fourier transform (FFT) on the pre-encoded transmit signal, and send the transformed signal to a compensating module 123;

the compensating module 123, adapted to receive a pre-compensation control signal, perform dispersion compensation on the transformed signal according to the pre-compensation control signal, and send the compensated signal to a frequency time transforming module 124. According to this embodiment, the signal is compensated through an H ($\omega$) function. The H ($\omega$) function is the conjugation of link dispersion transmission functions, that is, $H(\omega) = \exp(-j\beta_2\omega^2 L/2)$. If an optical signal passes through different fiber transmission segments,

$$H(\omega) = \sum_i \exp(-j\beta_{2i}\omega^2 L_i / 2)$$ where $\beta 2$

and L values are controlled by the control signal);

the frequency time transforming module 124, adapted to perform inverse fast Fourier transform (IFFT) on the compensated signal, and send the transformed signal to a modulator I/O converting module 125; and

the modulator I/O converting module 125, adapted to convert the transformed signal into a drive signal of the electrical/optical converting module.

The digital pre-processing module 12 may be implemented through a digital signal processor (DSP), a field programmable gate array (FPGA) or an application specific integrated circuit (ASIC). In this embodiment, the FPGA is used to implement the digital pre-processing module 12.

The post-compensation processing module 7 may perform dispersion compensation in real time dynamically, and expand the dispersion tolerance scope of the system from AB to A1B1, as shown in Figure 4. The post-compensation processing module 7 performs adjustment control through the following steps: by a detection module 8, detecting the quality of an electrical signal, generating an adjustment control signal, and feeding back the adjustment control signal to the post-compensation processing module 7 for adjusting the amount of dispersion compensation. The post-compensation processing module 7 may compensate the remaining dispersion amount of the whole system, and perform dynamic compensation by adjusting the dispersion change due to temperature change in real time. The post-compensation processing module 7 may be implemented through various EDCs or electronic equalizers (EEQs), for example:

(1) an adaptive forward equalizer (FFE), using an eye pattern detection circuit or a decision feedback circuit to detect the quality of a signal;
(2) a multi-threshold equalizer, using a FEC error correction circuit to detect the quality of a signal; and
(3) a maximum likelihood equalizer (MLSE).

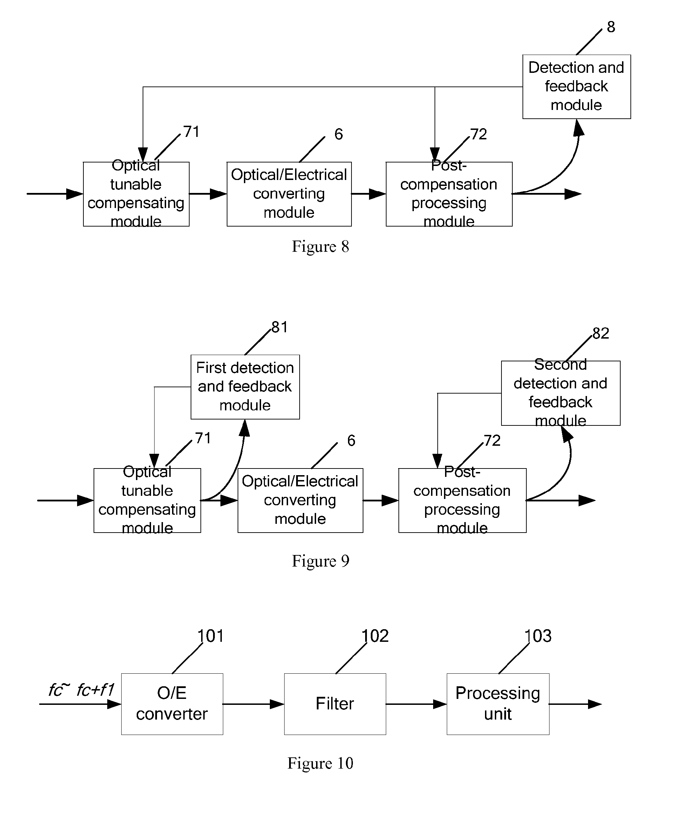

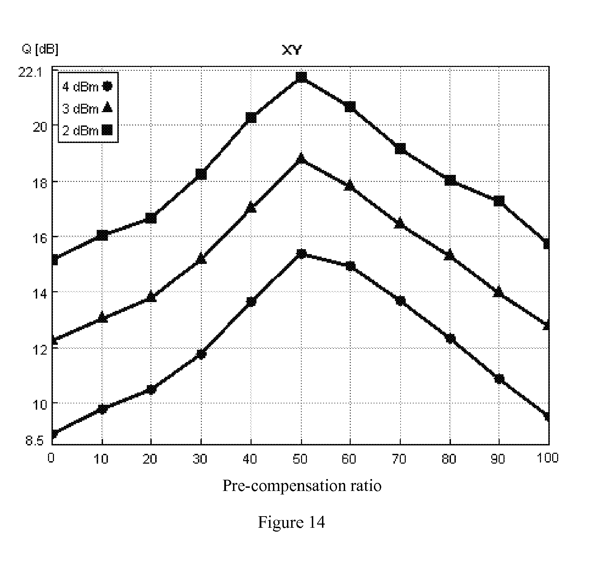

When the transmission distance is long, the post-compensation processing mode may compensate a small amount of dispersion only, usually within the scope of 250 km. Thus, when the system transmission distance is longer than 1,000 km, the amount of dispersion that needs to be compensated at the transmitting end exceeds 75% of the total amount of dispersion of the system, as shown in Figure 14, and the signal transmission quality is 3 dB poorer than the optimal level. To improve the system performance, dispersion compensation may be performed before the optical/electrical converting module receives the signal. The optical dispersion compensating module shown in Figure 7 is an optical fixed compensating module 70 that is untunable. A traditional DCF may be used. The optical dispersion compensating module in Figure 8 and Figure 9 is an optical tunable compensating module 71, for example, sampled chirped bragg grating, Gires-Tournois Etalons, loop harmonic oscillator, Mach-Zehnder interferometer (MZI), virtually imaged phased array (VIPA), waveguide grating, or a combination of grating and deformable mirror.

If a tunable optical dispersion compensating module is used, a post-compensation adjustment control signal may be obtained through the feedback signal provided by the detection and feedback module 8, as shown in Figure 8. A post-compensation adjustment control signal may also be obtained by detecting the quality of an optical signal before the optical signal is converted by the optical/electrical converting module, as shown in Figure 9. That is, a first detection and feedback module 81 is set before the optical/electrical converting module. The first detection and feedback module 81 is adapted to detect the quality of an optical signal, obtain a post-compensation adjustment control signal according to the quality of the optical signal, and send the post-compensation adjustment control signal to the optical tunable compensating module 71. A second detection and feedback module 82 is set after a post-compensation processing module 72. The second detection and feedback module 82 is adapted to detect the quality of an electrical signal, obtain a post-compensation adjustment control signal according to the quality of the electrical signal, and send the post-compensation adjustment control signal to the post-compensation processing module 72.

The detection and feedback module 8 shown in Figure 8 may detect the quality of an electrical signal through the following method:

(1) detecting the error rate of the signal from the EDC;
(2) detecting the eye pattern openness;
(3) detecting the mean square error of the electrical signal; and
(4) by the FEC error correction circuit, detecting the quality of the signal.

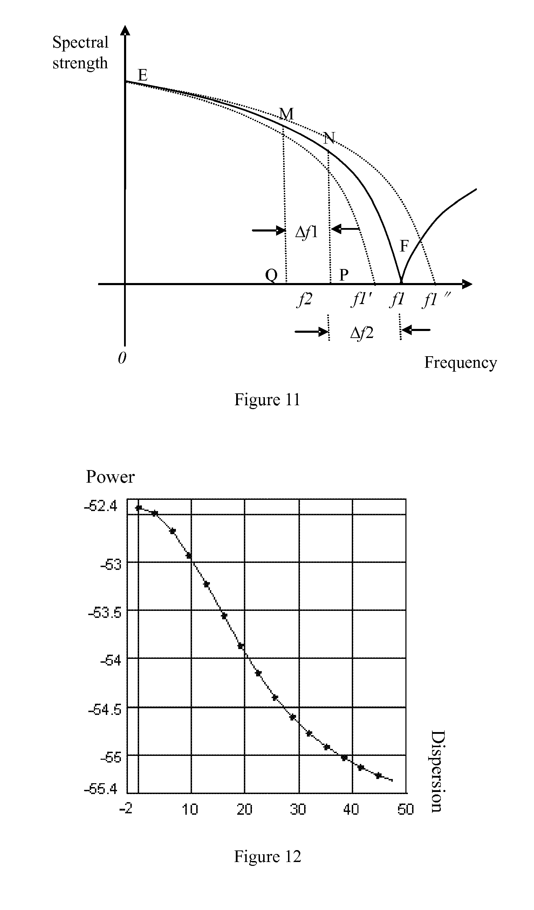

The first detection and feedback module 81 and the second detection and feedback module 82 shown in Figure 9 can reflect the dispersion change by detecting the change of the radio frequency signal spectral power within a specific band. As shown in Figure 11, $f_L$ is the spectral frequency of a received signal with zero power caused by dispersion. This frequency may vary with the dispersion, leading to the change of power detected within the $\Delta f$ spectral range, as shown in Figure 12.

As shown in Figure 10, the first detection and feedback module includes:

an O/E converter 101, adapted to receive a detected optical signal, and send the received signal to a filter 102;
the filter 102, adapted to filter the received detected optical signal to obtain a specific frequency signal, and send the specific frequency signal to a processing unit 103, where the frequency of the received signal ranges from fc to fc + fl; and
the processing unit 103, adapted to analyze the power change of the received specific frequency signal, and detect the dispersion change according to the power change.

The second detection and feedback module 82 includes the filter 102 and the processing unit 103 only.

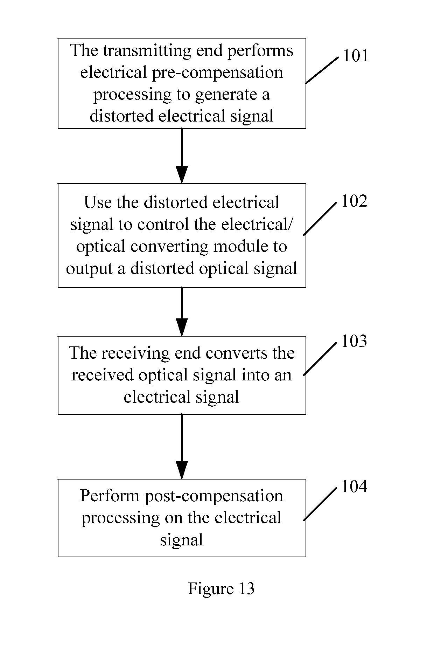

As shown in Figure 13, the dispersion compensation method by using the preceding system includes the following steps:

Step 101: The transmitting end performs electrical pre-compensation processing on a digital transmit signal by using the pre-compensation signal processing module 1 to obtain a distorted electrical signal.

The electrical pre-compensation process is described as follows:

transmitting the network configuration information to the pre-compensation control module 11 to obtain the amount of dispersion when the transmit signal passes through the transmission line, and to obtain a control signal;
pre-distorting the transmit signal through the digital pre-processing module 12 according to the control signal to obtain a distorted electrical signal, and to compensate the amount of dispersion; and
the distorted electrical signal is converted into an analog distorted electrical signal by the digital/analog converter 13. The analog distorted electrical signal controls the electrical/optical converting module 3 to modulate an optical carrier signal of a DC optical source 2 to generate a pre-compensated distorted optical signal.

If the optical signal is modulated in such special modes as ODB and DPSK, the pre-encoding processing module 14 is needed to pre-encode the transmit signal. The pre-encoding process is as follows: inputting the transmit signal to the pre-encoding processing module 14, encoding the transmit signal to obtain a pre-encoded signal, and sending the pre-encoded signal to the digital pre-processing module 12.

The digital pre-processing module 12 performs digital pre-processing through the following steps:

the sampling module 121 performs time frequency transform on the pre-encoded signal; then the time frequency transforming module 122 performs FFT, and sends the transformed signal to the compensating module 123;
the compensating module 123 performs dispersion compensation on the transformed signal according to a pre-compensation control signal upon the time frequency transform; the sampling function H($\omega$) of the compensating module 123 performs dispersion compensation, where the H($\omega$) function is the conjugation of link dispersion transmission functions, that is, $H(\omega) = \exp(-j\beta_{2\omega}^2 L/2)$, and $\beta 2$ and L values are controlled by the control signal; and
the frequency time transforming module 124 performs IFFT on the compensated signal to transform from the frequency domain to the time domain; the modulator I/O converting module 125 converts the transformed signal into the drive signal of the modulator.

Step 102: The distorted electrical signal is used to control the electrical/optical converting module 3 to output a distorted optical signal.

Step 103: After the distorted optical signal is transmitted through the fiber transmission line 5, the distorted optical signal is recovered to a normal optical signal, and the recovered optical signal is sent to the receiving end. The receiving end converts the optical signal into an electrical signal by using the optical/electrical converting module 6, and outputs the electrical signal.

Step 104: The post-compensating module 7 performs post-compensation processing on the electrical signal output by the receiving end. The post-compensating module 7 may perform real-time adjustment by detecting the post-compensation adjustment control signal output by the detection and feedback module 8.

In addition, there is another method for post-compensation processing, that is, performing post-compensation processing on an optical signal before the optical/electrical converting module 6, and converting the compensated optical signal into an electrical signal.

The following emulation has been performed on the present invention:

transmission rate of 10 Gbit/s, channel central wavelength of 1550 nm, standard single-mode fiber, 80 km span, total transmission distance of 640 km; power generation is performed in each segment through an erbium doped fiber amplifier (EDFA); dispersion compensation is performed at the transmitting end and the receiving end, that is, dispersion compensation is not performed on the line, and the total amount of dispersion compensated at the transmitting end and the receiving end is equal to the total amount of dispersion on the line; the dispersion allocation proportion of the transmitting end and the receiving end is changed to check the system transmission performance. Figure 14 shows the emulation result, in which the horizontal coordinate indicates the proportion of the pre-compensated dispersion to the total dispersion generated on the whole transmission link (also the pre-compensation ratio), and the vertical coordinate indicates the Q value of the received signal. The bigger the Q value is, the better the quality of the signal is. The emulation result indicates that when the transmitting end and the receiving end have the same amount of dispersion (namely, 50% of the total dispersion), the system performance is optimal. When the total amount of dispersion is compensated at the transmitting end or receiving end only, the system performance is the poorest, and the Q value is 7 dB smaller than that when the performance is optimal.

Although the present invention has been described through some exemplary embodiments, the present invention is not limited to such embodiments. It is apparent that those skilled in the art can make various modifications and variations to the present invention without departing from the spirit and scope of the present invention. The invention is intended to cover the modifications and variations provided that they fall in the scope of protection defined by the following claims or their equivalents.

**Claims**

1. A dispersion compensation method, comprising:

by a transmitting end, performing electrical pre-compensation processing on a transmit signal to obtain a distorted electrical signal, and converting an optical carrier signal into a distorted optical signal through modulation according to the distorted electrical signal; and after recovering the distorted optical signal to a recovered optical signal through a transmission line, sending the recovered optical signal to a receiving end; upon receipt of the recovered optical signal, by the receiving end, performing post-compensation processing after converting the recovered optical signal into an electrical signal, or performing post-compensation processing before converting the recovered optical signal into an electrical signal.

2. The method of claim 1, wherein the process of performing electrical pre-compensation processing comprises: adjusting electrical pre-compensation for the transmit signal according to configured line dispersion information of a system.

3. The method of claim 1, wherein the process of performing electrical pre-compensation processing comprises: adjusting electrical pre-compensation for the transmit signal according to a characteristic of total dispersion tolerance of a system.

4. The method of claim 1, wherein the process of performing electrical pre-compensation processing comprises:

obtaining a control signal according to network configuration information; and based on the control signal, performing electrical pre-compensation processing on the transmit signal to obtain a distorted electrical signal and ensure compliance between generated compensation effects and dispersion compensation requirements on the transmission line.

5. The method of claim 1, wherein the process of performing post-compensation processing comprises:

by the receiving end, detecting quality of an output optical signal or electrical signal in real time, generating a post-compensation adjustment control signal according to the quality of the optical signal or electrical signal, and adjusting compensation based on the post-compensation adjustment control signal in real time.

6. The method of claim 5, wherein the quality of the electrical signal comprises:

error rate of the signal, eye pattern openness, mean square error of the signal or quality of the signal detected by a forward error correction circuit.

7. The method of claim 1, wherein electrical dispersion compensation is performed after the recovered optical signal is converted into an electrical signal, or the recovered optical signal is converted into an electrical signal after optical dispersion compensation is performed on the recovered optical signal, or the recovered optical signal is converted into an electrical signal and electrical dispersion compensation is performed after optical dispersion compensation is performed on the recovered optical signal.

8. The method of claim 7, wherein the optical dispersion compensation is an untunable or tunable optical dispersion compensation.

9. The method of claim 8, wherein the tunable optical dispersion compensation is performed through sampled chirped bragg grating, virtually imaged phased array (VIPA), Gires-Tournois Etalons (GTE), loop harmonic oscillator, waveguide grating or Mach-Zehnder interferometer (MZI), or a combination of grating and deformable mirror.

10. A fiber transmission system, comprising: a transmitting end, a fiber transmission line and a receiving end, wherein:

the transmitting end comprises:

a pre-compensation signal processing module, adapted to perform electrical pre-compensation processing on a transmit signal to obtain a distorted electrical signal; and an electrical/optical converting module, adapted to convert an optical carrier signal into a distorted optical signal through modulation according to the distorted electrical signal sent from the pre-compensation signal processing module; and

the receiving end comprises:

an optical/electrical converting module, adapted to convert a received optical signal into an electrical signal, where the optical signal is recovered from the distorted optical signal through the fiber transmission line; and a post-compensation processing module, adapted to perform dispersion compensation on the optical signal or electrical signal.

11. The system of claim 10, further comprising:

a detection and feedback module, adapted to detect quality of the optical signal before the optical signal is converted by the optical/electrical converting module or quality of the electrical signal after the optical signal is converted by the optical/electrical converting module, and feed back a detection result to the post-compensation processing module.

12. The system of claim 10, wherein the pre-compensation signal processing module comprises:

a pre-compensation control module, adapted to obtain an amount of dispersion when the transmit signal passes through the transmission line according to network configuration information, and obtain a control signal according to the amount of dispersion; a digital pre-processing module, adapted to pre-process the transmit signal based on the control signal to generate a distorted electrical signal; and a digital/analog converter, adapted to convert the received distorted electrical signal into an analog distorted electrical signal.

13. The system of claim 12, wherein the pre-compensation signal processing module further comprises:

a pre-encoding processing module, adapted to encode the transmit signal, and send the encoded signal to the digital pre-processing module.

14. A transmitting apparatus, comprising:

a pre-compensation signal processing module, adapted to perform electrical pre-compensation processing on a transmit signal according to a pre-compensation ratio to obtain a distorted electrical signal; and an electrical/optical converting module, adapted to convert an optical carrier signal into a distorted optical signal through modulation according to the obtained distorted electrical signal.

15. The transmitting apparatus of claim 14, wherein the pre-compensation signal processing module comprises:

a pre-compensation control module, adapted to obtain the pre-compensation ratio according to network configuration information, obtain an amount of dispersion of the transmit signal, and obtain a control signal according to the amount of dispersion; and
a digital pre-processing module, adapted to pre-process the transmit signal based on the control signal to generate a distorted electrical signal.

16. A receiving apparatus, comprising:

means for receiving a recovered optical signal from a transmitting end, wherein the recovered optical signal has undergone electrical pre-compensation processing; and
means for performing compensation processing after converting the recovered optical signal into an electrical signal, or converting the recovered optical signal into an electrical signal after performing post-compensation processing on the recovered optical signal.

Pre-compensation → Optical transmitting module → Optical transmission line → Optical receiving module

Optical receiving module → Detection and feedback module

Detection and feedback module → Pre-compensation

Figure 1

Cost

Transmission distance

0

A  C  B

Figure 2

```
                    ┌──────────────────┐
                    │ Pre-compensation │ ╱1
               ────▶│ signal processing│
                    │      module      │
                    └──────────────────┘
                             │
    ╱2                       ▼         ╱3        ╱41         ╱5          ╱42
┌──────────┐        ┌──────────────────┐    ╱       ┌──────────────┐    ╱
│ Optical  │        │ Electrical/Optical│   ╱        │    Fiber     │   ╱
│ source   │───────▶│ converting module │──▶        │ transmission │──▶
└──────────┘        └──────────────────┘           │     line     │
                                                    └──────────────┘
```

Figure 3

Figure 4

Network configuration information → Pre-compensation control module (11) → Digital pre-processing module (12) → Digital/Analog converter (13) → Electrical/Optical converting module (3) → Distorted optical signal

Transmit signal → Pre-encoding processing module (14) → Digital pre-processing module (12)

Optical source (2) → Electrical/Optical converting module (3)

Figure 5

Pre-encoded data → Sampling module (121) → Time frequency transforming module (122) → Compensating module (123) → Frequency time transforming module (124) → Modulator I/O converting module (125)

Pre-compensation control signal → Compensating module (123)

Figure 6

Detection and feedback module (8)

→ Optical fixed compensating module (70) → Optical/Electrical converting module (6) → Post-compensation processing module (72) →

Figure 7

EP 2 051 417 A1

Figure 8

Figure 9

Figure 10

Figure 11

Figure 12

```
┌─────────────────────────────┐
│  The transmitting end performs  │    ╱ 101
│   electrical pre-compensation    │
│     processing to generate a     │
│    distorted electrical signal   │
└─────────────────────────────┘
              │
              ▼
┌─────────────────────────────┐
│    Use the distorted electrical  │    ╱ 102
│  signal to control the electrical/ │
│   optical converting module to   │
│  output a distorted optical signal │
└─────────────────────────────┘
              │
              ▼
┌─────────────────────────────┐
│   The receiving end converts the │    ╱ 103
│   received optical signal into an │
│         electrical signal        │
└─────────────────────────────┘
              │
              ▼
┌─────────────────────────────┐
│    Perform post-compensation     │    ╱ 104
│    processing on the electrical   │
│             signal               │
└─────────────────────────────┘
```

Figure 13

Figure 14

## INTERNATIONAL SEARCH REPORT

| International application No. |
|---|
| PCT/CN2007/002587 |

| A. CLASSIFICATION OF SUBJECT MATTER |
|---|
| H04B 10/18 (2006.01) i |
| According to International Patent Classification (IPC) or to both national classification and IPC |

| B. FIELDS SEARCHED |
|---|
| Minimum documentation searched (classification system followed by classification symbols) |
| IPC: H04B , H04J , G06F |
| Documentation searched other than minimum documentation to the extent that such documents are included in the fields searched |
| |
| Electronic data base consulted during the international search (name of data base and, where practicable, search terms used) |
| WPI,EPODOC,PAJ, CPRS,CNKI: DISPERSION, COMPENSAT+, OPTICAL, ELECTRON+, ELECTRIC+, TRANSMIT+, SEND+, TRANSCEIVER, PRECOMPENSAT+, BEFOREHAND, ADVANCE, MODULAT+, PREDISTORT+, DISTORT+, EDC |

| C. DOCUMENTS CONSIDERED TO BE RELEVANT | | |
|---|---|---|
| Category* | Citation of document, with indication, where appropriate, of the relevant passages | Relevant to claim No. |
| X | US6574389B1 (BROADBAND ROYALTY) 03 Jun.2003 (03.06.2003) <br><br> Abstract, description column 2 lines 15-35, column 3 line 48- column 7 line 40, figures 1-2 | 1-4,10,12-16 |
| Y | | 5-9,11 |
| Y | CN1753335A (LUCENT TECHNOLOGIES INC) 29 Mar.2006 (29.03.2006) <br><br> Description page 4 line 16-page 8 line 26, figures 1-2 | 5-9,11 |
| A | | 1-4,10,12-16 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 20 Oct.2007 (20.10.2007) | **01 Nov. 2007 (01.11.2007)** |

| Name and mailing address of the ISA/CN <br> The State Intellectual Property Office, the P.R.China <br> 6 Xitucheng Rd., Jimen Bridge, Haidian District, Beijing, China 100088 <br> Facsimile No. 86-10-62019451 | Authorized officer <br><br> YE Jian <br><br> Telephone No. (86-10)62084571 |
|---|---|

Form PCT/ISA/210 (second sheet) (April 2007)

**EP 2 051 417 A1**

## INTERNATIONAL SEARCH REPORT

| International application No. |
|---|
| PCT/CN2007/002587 |

C (Continuation). DOCUMENTS CONSIDERED TO BE RELEVANT

| Category* | Citation of document, with indication, where appropriate, of the relevant passages | Relevant to claim No. |
|---|---|---|
| X | US2006078336A1 (NORTEL NETWORKS LTD) 13 Apr.2006 (13.04.2006)<br><br>Description, figures 1-7 | 14-15 |
| A |  | 1-13,16 |
| A | CN1094552A (SCIENTIFIC ATLANTA) 02 Nov.1994 (02.11.1994)<br><br>See the whole document | 1-16 |

Form PCT/ISA/210 (continuation of second sheet ) (April 2007)

18

## INTERNATIONAL SEARCH REPORT
### Information on patent family members

| International application No. |
| --- |
| PCT/CN2007/002587 |

| Patent Documents referred in the Report | Publication Date | Patent Family | Publication Date |
| --- | --- | --- | --- |
| US6574389B1 | 03.06.2003 | WO0072481A1 | 30.11.2000 |
| | | EP1101301A1 | 23.05.2001 |
| | | US2002106148A1 | 08.08.2002 |
| | | JP2003530729T | 14.10.2003 |
| | | US6687432B2 | 03.02.2004 |
| | | EP1101301B1 | 21.12.2005 |
| | | DE60024954E | 26.01.2006 |
| | | US2006165413A1 | 27.07.2006 |
| | | DE60024954T | 24.08.2006 |
| CN1753335A | 29.03.2006 | JP2006094500A | 06.04.2006 |
| | | US2006067699A1 | 30.03.2006 |
| | | EP1641152A1 | 29.03.2006 |
| US2006078336A1 | 13.04.2006 | US2005008364A1 | 13.01.2005 |
| | | US2005007642A1 | 13.01.2005 |
| | | EP1554822A1 | 20.07.2005 |
| | | WO2004032386A1 | 15.04.2004 |
| | | AU2003273683A1 | 23.04.2004 |
| | | EP1563619A1 | 17.08.2005 |
| | | WO2004032385A1 | 15.04.2004 |
| | | AU2003249795A1 | 23.04.2004 |
| | | US2004067064A1 | 08.04.2004 |
| | | US7023601B | 04.04.2006 |
| CN1094552A | 02.11.1994 | WO9413076A1 | 09.06.1994 |
| | | JP8503827T | 23.04.1996 |
| | | IL107826A | 14.11.1996 |
| | | EP0705509A1 | 10.04.1996 |
| | | AU5678994A | 22.06.1994 |
| | | AU673223B | 31.10.1996 |
| | | US5430568A | 04.07.1995 |
| | | TW236057A | 11.12.1994 |
| | | MX185910B | 10.09.1997 |

Form PCT/ISA/210 (patent family annex) (April 2007)